Europäisches Patentamt

European Patent Office

Office européen des brevets

(11) Publication number: **0 403 140**
**A2**

## (12) EUROPEAN PATENT APPLICATION

(21) Application number: **90306085.3**

(22) Date of filing: **05.06.90**

(51) Int. Cl.⁵: **H04N 11/08**

(30) Priority: **13.06.89 GB 8913534**

(43) Date of publication of application:
**19.12.90 Bulletin 90/51**

(84) Designated Contracting States:
**AT BE CH DE DK ES FR GB GR IT LI LU NL SE**

(71) Applicant: **BRITISH BROADCASTING
CORPORATION**
**Broadcasting House**
**London W1A 1AA(GB)**

(72) Inventor: **Childs, Ian, C/o BBC Research
Department**
**Kingswood Warren**
**Tadworth, Surrey KT20 6NP(GB)**

(74) Representative: **Harland, Linda Jane**
**c/o Reddie & Grose 16 Theobalds Road**
**London WC1X 8PL(GB)**

(54) Television system, and transmitter and High-definition receiver for use therein.

(57) A television receiver, preferably a HD-MAC receiver, includes a decoder for the additional high definition information which is software controlled. To allow for future improvements in the decoder, software routines for use in the decoder are transmitted with the television signal as part of the digital assistance (DATV) information. The receiver downloads them as appropriate dependent upon a comparison of hardware and software version codes in the transmission and held in the decoder respectively. The decoder comprises a microprocessor (34) and a rom program store portion (30) for holding the downloaded software and a ram program store portion (28) for holding fall-back software.

EP 0 403 140 A2

## TELEVISION SYSTEM, AND TRANSMITTER AND HIGH-DEFINITION RECEIVER FOR USE THEREIN

This invention relates to television systems in which a television signal is transmitted which comprises picture information at a normal level of definition and, in a non-active-picture part of the signal, additional coded information representative of further picture detail. A normal definition receiver receives and displays the picture at the normal level of definition. A high definition receiver receives the picture at the normal level of definition, also receives and decodes the additional information, and modifies the normal definition picture on the basis of the decoded additional information, to give a picture which is displayed at a higher definition.

One of the major problems, in designing possible broadcasting formats for bandwidth-reduced HDTV (high definition television) signals, is ensuring that sufficient account is taken of the technological developments that are likely to occur in the lifetime of the signal standard. The 405-line system, for example, lasted nearly fifty years; if the HDTV broadcasting standard lasts for only half of this time, it can nevertheless be expected that very significant advances in the technology of signal processing circuitry and display devices will occur during that period.

In order to allow the maximum advantage to be taken of such advances in technology, it is vital to ensure that a high degree of flexibility is provided in the specification of the broadcasting system. Such a degree of flexibility will, however, increase the cost of the first generation of decoders.

Current proposals for the coding of HDTV signals in a format compatible with the MAC/packet family of standards use a number of coding branches, some of which employ compensation for motion vectors within the scene. For a background description of such proposals see a paper by Vreeswijk, F.W.P. et al. "HD-MAC coding of high definition television signals" published in Proceedings of the 1988 International Broadcasting Convention (IEE Conference Publication No. 293), pp 62-65. As described in that paper a MAC video signal is transmitted in analogue form and consists of two time-multiplexed components; chrominance and luminance respectively. Extra high definition information is added to this signal in such a way that a normal definition receiver can display the MAC signal with minimal impairments. A high definition receiver extracts the extra information and displays a high definition picture. The system described treats the picture in blocks of, say, eight samples by eight lines, and for each block compares successive fields to determine the rate of movement of the picture in the block. Three different velocity ranges are identified, and one of three different processor branches used in dependence on the velocity determined for that block. Each branch effects a different trade-off between spatial and temporal detail. Some branches may include motion compensation. For this purpose motion vectors are transmitted and used in the decoder.

The selection of which branch is to be used in the decoder, together with the values of the motion vectors, if appropriate, is signalled to the receiver using DATV (digital assistance television) information in the field blanking interval. We have noted that a major factor limiting the system flexibility is the way in which DATV decoding is specified. Unless provisions are made in the DATV specification for factors such as varying the range and accuracy of the motion vectors, varying the sizes of the blocks into which the picture is divided for coding branch selection, or altering which coding branches take advantage of motion vector compensation, then it will not be possible to change these factors once the first generation of receivers are in the market place.

The invention in its various aspects is defined in the appended claims to which reference should now be made. In accordance with the invention, the decoding of the additional or high-definition information is controlled by software routines which are transmitted as part of the television signal.

Using a method embodying this invention it becomes possible to enhance the future flexibility of DATV coding strategy, without unduly adding to the complexity of the receiver hardware. The decoding of the DATV signal may be accomplished using a high-speed microprocessor system, with a suitable interface to the remainder of the HD-MAC decoding circuitry. The software for this microprocessor is not fully determined at the time of manufacture, however, but is instead signalled to the receiver as part of the DATV information. Thus, in principle, it is possible to alter most of the parameters of the DATV strategy as desired; the only penalty is to reduce the available capacity for information associated with the video signal itself, since part of the DATV channel is being used for the decoding software.

Thus it is seen that by transmitting at least part of the control program for the decoder as part of the video system, the ability of the system to take advantage of future improvements is enormously increased. It is known to transmit certain items of decoder data with a television signal in connection with conditional access systems which transmit information which is then used to unscramble the coded signal. However the program required by the descrambler is built into the decoder and is immutable. It has also been proposed to transmit
software by broadcasting techniques
("telesoftware"), but such software is not used by
the receiver itself but rather is passed on to a
subsidiary item of equipment.

While the invention has been introduced, and is
described below, in the context of an HD-MAC
television system, it would also be applicable to
enhanced PAL, SECAM or NTSC receivers, for
example as described in our UK Patent Application
2 195 061.

One embodiment of the invention will now be
described by way of example with reference to the
drawing, in which:

Figure 1 is a block diagram of a microprocessor based DATV decoder used in a receiver
embodying the invention.

Figure 2 shows the interface between the
decoder of Figure 1 and the HDMAC decoder in
greater detail; and

Figure 3 shows the interface of Figure 2.

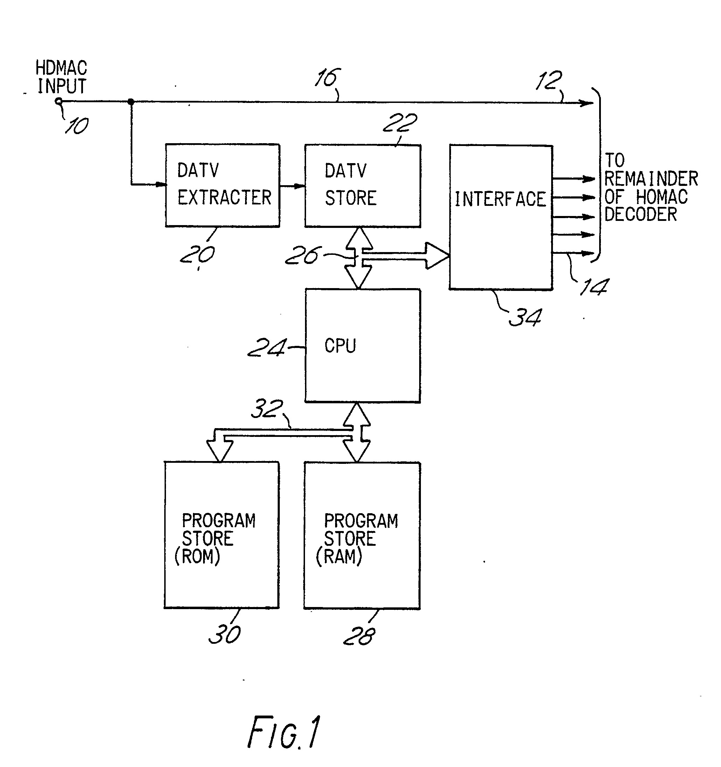

The hardware shown in Figure 1 includes an
input 10 for receiving an HD-MAC input signal and
outputs 12,14 for connection to the remainder of an
HD-MAC converter, not shown, of known type. The
input 10 and output 12 are connected by a line 16.
Also connected to the input 10 is a DATV extractor
circuit 20 which extracts the DATV information in
the field blanking interval and applies it to a DATV
store circuit 22. A CPU (central processor unit) 24
accesses the store 22 by a bus 26 and also has
connected to it a RAM program store 28 and a
ROM program store 30 via a bus 32. Also connected to the bus 26 is an interface circuit 34 the
output of which supplies the outputs 14.

The incoming HD-MAC signal contains the
DATV information encoded, in duo-binary form,
during the field blanking interval. The first process
is therefore to extract the DATV information in
extractor 20 and feed it to a suitable ram-based
store 22; the store provides a way of smoothing the
flow of information, which comes in short bursts of
high instantaneous data rate, to the slower but
more continuous capabilities of the central processor unit 24. The cpu itself decodes the data according to software, i.e. programs, loaded into the
ram portion 28 of the program store. At switch-on
the program is written into the ram from the relevant part of the DATV signal; the software to
enable this operation to be carried out is contained
in the rom portion 30 of the program store, with
control switching over to the ram portion once
writing is complete.

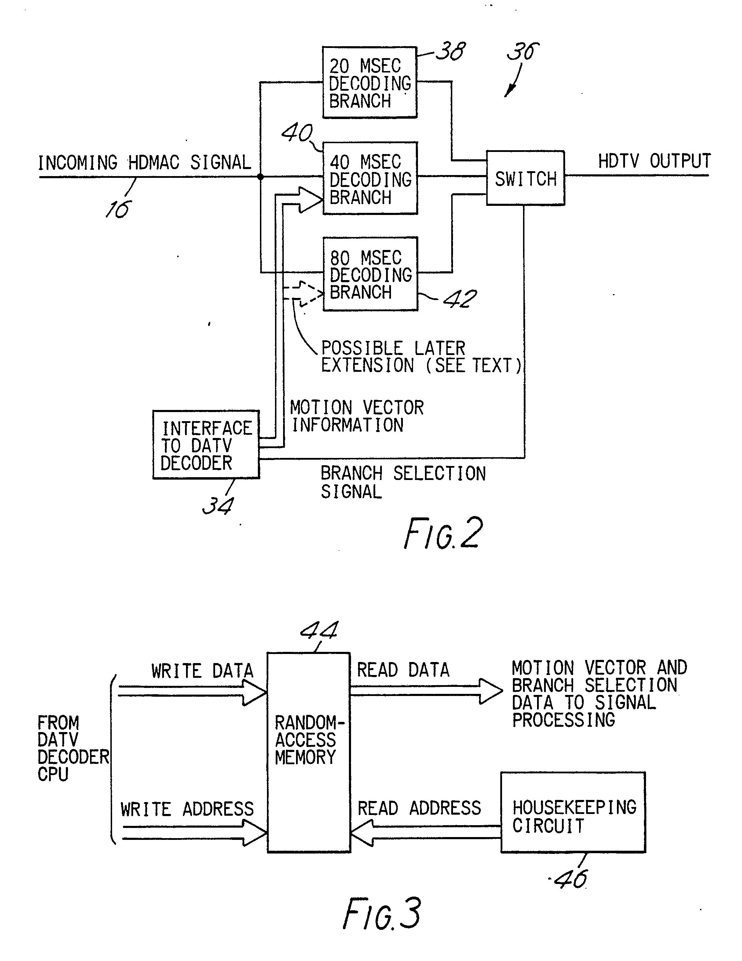

The cpu 24 is provided with interface 34 to
enable it to control the remainder of the HD-MAC
decoding circuitry. The interface 34 and the associated HDMAC decoder circuitry 36 is shown schematically in Figure 2. The HDMAC decoder 36
consists, in broad terms, of a number of signal
processing "branches" 38, 40, 42, each of which
corresponds to a similar branch in the encoder.
The branches are named according to the period
over which a complete television picture is assembled. Thus the 80 msec branch 42 takes 80 msec
or four fields to assemble all of the subsamples
onto a complete picture. The branch 40 takes 40
msec and the branch 38, 20 mesc.

At the encoder (not shown), the incoming television signal is first three-dimensionally filtered and
then subsampled. The filter serves to remove unwanted aliases from the subsampled signal.

In the system described in the Vreeswijk paper
referred to above, there are three coding branches
operating at 80,40 and 20 msec respectively. The
branch which, at the decoder, produces the closest
representation of the original studio signal, averaged over a 'coding block' of 16x16 samples, is
chosen for transmission of that particular coding
block. Information identifying the coding branch for
each coding block is sent to the receiver via the
DATV channel.

The coding branches 38,40,42 at the receiver
then collect the transmitted subsamples over the
relevant period (80, 40 or 20 msec), and interpolate
the missing samples in a three-dimensional interpolator matched to the filter used at the encoder
prior to subsampling. Although all three branches
38, 40 and 42 are active in the decoder, the output
from only one of these is chosen for display in
each coding block. The one that is chosen corresponds to the branch used to encode that particular block, and is selected using the DATV information transmitted with the subsampled signal.

In the Vreeswijk system referred to above, one
of the coding branches, the 40 msec branch, contains compensation for the measured motion vectors in the scene. These motion vectors are used to
"skew" the apertures of the anti-alias pre-filter and
the decoder interpolator so that smoothly moving
areas are portrayed at a higher spatial resolution.
Thus the information supplied to the decoder signal
processing from the DATV decoder will consist of a
motion vector and a branch selection signal for
each pixel in the HDTV output signal. These signals will come from the interface 34 in Fig. 1 of the
application. The interface 34, shown in greater detail in Figure 3, will then consist of a random-
access memory 44 which is written into by the
microprocessor 24 of the DATV decoder and read
from by the remainder of the decoder signal processing. The read addresses will be supplied from
suitable housekeeping circuits 46. It is not necessary to have a ram location in the interface for
every pixel of the HDTV picture. It is only necessary to have a ram location for every coding block;

the address generation circuitry can then ensure that this location is read by all of the pixels within a given block.

The interface 34 is a crucial part of the receiver, and should be used to control as many as possible of the receiver functions. As described above, it will typically contain the motion vectors and branch selection information for the HD-MAC decoder and field-rate upconverter, for each separate block of pixels in the picture. The number of pixel blocks provided is, however, one area where compromise is necessary. Ideally separate control signals should be available for each individual pixel; such provision would necessitate a high degree of storage complexity, though, and the computation speed in order to load data into this storage would also be excessively high. At the other extreme, it could be possible to provide only one location of storage for each 16 by 16 pixel block used in the current coding algorithm (see the Vreeswijk et al paper referred to above). This would keep the number of storage locations down to only 6480, but would mean that there would be no flexibility for subsequently reducing the size of the coding blocks. A possible solution would be to use a convenient size of ram stores, such as 16 or 32k, giving 16,384 or 32,768 storage locations; the interface would then possibly consist of two or three 32k by 8 bit rams, together with suitable logic circuits to connect them to the microprocessor bus 32. In any case, it is unlikely that the number of picture blocks will be able to be increased above this level, due to the limited capacity of the DATV channel itself.

The software capacity of the DATV channel will now be described. Taking into account the other constraints on the vertical blanking interval, such as the need to include insertion test signals, it seems likely that about 20 lines will be available per field for the transmission of DATV information. If this information is encoded into the same packet format as is used for the sound/data burst (and at the data rate appropriate to the D member of the MAC/packet family), then 28 data packets can be contained in every field blanking interval. This corresponds to an average data rate of 1.008 Mbit/sec, since each packet contains 720 useful bits of information.

It would seem possible to use one packet per field period for the transmission of the DATV decoding software; this would reduce the capacity available to the remainder of the DATV by 3.6% to 972 kbit/sec. The transmission rate for the decoding software would be 36 kbit/sec. The time taken to load the decoding program will, of course, depend on the complexity of the decoding algorithm and the degree of error protection provided.

A first problem that can be foreseen is that, if the decoding software were to become extremely complex, it might take several minutes to download it into the receiver. This could be disturbing to the viewer, who would not be able to decode the HD-MAC signals until the downloading has been completed. Also, if DATV is not present in the transmitted signal - perhaps because it has been originated at 625-lines, rather than at HDTV, the decoder will not know how to process the signal.

One solution is to include a fall-back decoding mode in the program memory rom 30; this fall-back mode then configures the HD-MAC decoding circuitry so that it processes the incoming signal in a way appropriate to 625-line origination. Thus signals with no DATV will be processed correctly and, on switch-on, decoded HD-MAC signals will be viewable (but at low resolution) until the decoding software has been loaded.

A second possible solution is to employ non-volatile rams for the programme store. In this case the algorithm used to decode the HD-MAC signal will not be lost when the receiver is switched off. The only problem is then if the decoding software is changed while the receiver is switched off. This is not likely to happen very often, however, and, provided that the appropriate precautions are taken (see below), simply results in the fall-back mode being selected until the new software version has been loaded.

Preferably the current version number of the DATV decoding software is always transmitted. Thus, if the DATV system is changed, the receiver can compare the current version number with the version number of its current software. If these are not the same, then the decoder reverts to its fall-back mode while the new version is being written into the program memory ram 28.

A second problem that can be foreseen is that there may, at some time, be a need to change the HD-MAC decoding hardware; for example, motion vector compensation may be added to a branch that did not use it in first-generation receivers. Because the first-generation receivers will continue to exist in the marketplace, such a move can only be made if there is an acceptable degree of compatibility in the resultant displayed pictures. However, in order to achieve this compatibility it may be necessary for the DATV decoding algorithms of first-generation and second-generation receivers to be different (in the example quoted, the first- generation receiver will need to know how to decode a signal that has been encoded for a branch which it does not possess).

A solution to this problem can be found by transmitting both sets of decoding software, together with information on the decoder version number appropriate to each. Thus each packet of data used for software transmission should contain two version numbers - one appropriate to the generation of the software material itself, and the other appropriate to the generation of the hardware for which it is intended. Each decoder then stores the software which is appropriate for it.

## Claims

1. A television system in which a television signal is transmitted comprising picture information at a normal level of definition and, in a non-active-picture part of the signal, additional coded information representative of further picture detail, and in which a normal definition receiver receives and displays the picture at the normal level of definition, and a high definition receiver receives the picture at the normal level of definition, receives and decodes the additional information, and modifies the normal definition picture on the basis of the decoded additional information to give a picture which is displayed at a higher definition, characterised in that the decoding of the additional information is controlled by software routines which are transmitted as part of the television signal.

2. A system according to claim 1, in which the normal definition picture is transmitted in MAC format.

3. A system according to claim 1, in which the normal definition signal is transmitted in PAL, SECAM or NTSC format.

4. A system according to claims 1, 2 or 3, in which the additional information is transmitted in digital format.

5. A system according to any of claims 1 to 4, in which the additional information is transmitted on lines in the frame blanking interval.

6. A system according to any of claims 1 to 5, in which the additional information is related to respective blocks of the normal definition picture area.

7. A system according to any of claims 1 to 6, in which the additional information includes motion vectors indicating the amount of movement of picture areas between fields.

8. A system according to any of claims 1 to 7, in which the additional information determines which of a number of possible processing branches (38,40,42) are used.

9. A system according to any of claims 1 to 8, in which the decoder is microprocessor based.

10. A system according to any of claims 1 to 9, in which the decoder comprises rom and ram program store portions (30,28).

11. A system according to claim 10, in which the rom store portion (30) is used to contain fall-back software decoding routines.

12. A system according to claims 10 or 11, in which the ram store portion (28) comprises a non-volatile store.

13. A system according to any of claims 1 to 12, in which the signal includes a software version code, and in which the received software version code is compared with a stored software version code and the stored software is selectively updated dependent upon the result of the comparison.

14. A system according to any of claims 1 to 13, in which the signal includes a hardware version code indicative of the hardware version for which the software is appropriate, and in which the received hardware code is compared with a stored hardware version code and the stored software is selectively updated dependent upon the result of the comparison.

15. A television transmitter in which a television signal is transmitted comprising picture information at a normal level of definition, and in a non-active-picture part of the signal, additional coded information of further picture detail, the additional coded information being capable of being decoded and used to modify the normal definition picture to give a picture for display at a higher definition, characterised in that the signal further comprises software routines for use in such decoding of the additional information.

16. A high-definition television receiver comprising means for receiving a television signal which comprises picture information at a normal level of definition and, in a non-active-picture part of the signal, additional coded information representative of further picture detail, software controlled means for decoding the received additional information, and means for modifying the normal definition picture on the basis of the decoded additional to display the picture at a high definition, characterised by means for extracting from the television signal and storing software routines which are used by the decoding means to decode the additional information.

17. A television signal comprising picture information at a normal level of definition and, in a non-active-picture part of the signal, additional coded information representative of further picture detail, characterised in that the non-active-picture part of the signal also includes software routines defining the method of decoding of the further picture detail information.

18. A method of television transmission, comprising transmitting a television signal which includes picture information at a normal level of definition and, in a non-active-picture part of the signal, additional coded information representative of further picture detail, and at a normal definition receiver receiving and displaying the signal at the normal level of definition, and at a high definition receiver, receiving the picture at the normal level of definition, receiving and decoding the additional information, and modifying the normal definition picture on the basis of the decoded additional information to give a picture which is displayed at a higher definition,

characterised by transmitting software routines as part of the television signal, and in that the decoding of the additional information is controlled by the transmitted software routines.

FIG.1

FIG.2

FIG.3